Europäisches Patentamt

European Patent Office

Office européen des brevets

(11) Publication number: **0 350 944 B1**

## EUROPEAN PATENT SPECIFICATION

(45) Date of publication of patent specification: **14.06.95**

(51) Int. Cl.6: **B60C 9/00**, D01D 5/253, D01F 6/60, D01F 6/62

(21) Application number: **89112947.0**

(22) Date of filing: **14.07.89**

(54) **Monofilament for embedding in rubber.**

(30) Priority: **15.07.88 US 220048**

(43) Date of publication of application:
**17.01.90 Bulletin 90/03**

(45) Publication of the grant of the patent:
**14.06.95 Bulletin 95/24**

(84) Designated Contracting States:
**DE FR GB**

(56) References cited:
**US-A- 3 298 417**
**US-A- 3 650 884**
**US-A- 4 009 511**
**US-A- 4 056 652**

**RESEARCH DISCLOSURE, April 1989, disclosure no. 30076, Industrial Opportunities Ltd, Havant, GB; DU PONT DE NEMOURS: "Polyamide monofilament"**

(73) Proprietor: **E.I. DU PONT DE NEMOURS AND COMPANY**
**1007 Market Street**
**Wilmington**
**Delaware 19898 (US)**

(72) Inventor: **Henning, Gregory N.**
**3205 Heathwood Road**
**Wilmington**
**Delaware 19810 (US)**
Inventor: **Gupta, Dipak**
**115 Ouaker Hill Lane**
**Hockessin**
**Delaware 19707 (US)**

(74) Representative: **Abitz, Walter, Dr.-Ing. et al**
**Patentanwälte Abitz & Partner**
**Postfach 86 01 09**
**D-81628 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

## BACKGROUND OF THE INVENTION

This invention relates to a method for producing a reinforced rubber fabric from monofilament fibers from organic polymers suitable for embedding in rubber. More particularly, this invention uses a monofilament having from 550-11 000 dtex (500 to 10,000 denier-per-filament (dpf)) coated with an adhesive, a method for producing a reinforced rubber fabric, and rubber articles containing aligned monofilaments which are free of pick yarns or filaments.

Multifilament tire yarns from organic polymers, such as polyamide and polyester, undergo many processing steps before they are ready for embedment in rubber and tire building. The usual steps are twisting of single yarns, cabling (twisting) of the twisted singles yarns into greige cord, weaving of the greige cord, dipping of the woven greige cord in RFL (resorcinol-formaldehyde-latex) adhesive, stretching and heating to dry and set the tire cord. The cord is then ready for rubber embedment. The twisting and cabling steps are considered essential to the achievement of the desired level of fatigue resistance in end use applications like tires and belts.

Monofilaments from polyamide polymers have found limited use in tires to date. Such use was disclosed in U.S. patents 4,009,551 and 4,056,652, and in Project Licensing Index, April, 1972.

U.S. Patent No. 3,298,417 discloses the use of polyhexamethylene adipamide monofilaments for rubber reinforcement in which a drum winding embedding technique is used. Drum winding is useful only for laboratory and lab scale tests and it has not been used commercially.

The use of nylon monofilament in radial tires is the subject of EP-A 312 038 (88 116 987).

It would be highly desirable to have a monofilament which required none of the above weaving and setting steps currently required before rubber embedment.

## Summary of the Invention

A monofilament of organic polymer suitable for embedding in rubber is provided in accordance with the invention. The monofilament has a surface defining the cross-sectional shape of the monofilament, a weight per length in the range of from 550 - 11,000 dtexpf (500-10,000 dpf), a shrinkage of less than 4.5%, a modulus greater than 39 dN/tex (45 gpd), a tenacity of greater than 6.2 dN/tex (7.0 gpd) and an adhesive coating of from about 0.5 to about 5 percent by weight on said filament. In accordance with another aspect of the invention, a method is provided for producing reinforced rubber fabric in which monofilaments are formed into a warp with the monofilaments being generally parallel and generally evenly-spaced apart and are embedded into rubber under tension. In accordance with another aspect of the invention, rubber articles are provided containing at least one layer of monofilaments having a generally parallel and generally evenly spaced relationship and being free of weft yarns or filaments.

## Description of the Drawings

Figure 1 schematically illustrates a cross-sectional view of the monofilament of this invention;

Figure 2 is a diagrammatical plan view of a process for producing a reinforced rubber fabric in accordance with this invention;

Figure 3 is a diagrammatical elevational view of the the process illustrated in Figure 2.

Figure 4 is a graphical representation of data in which hot, 2-ply adhesion is plotted against percent adhesive for monofilaments of the invention and multifilament cords.

## Detailed Description of the Preferred Embodiment

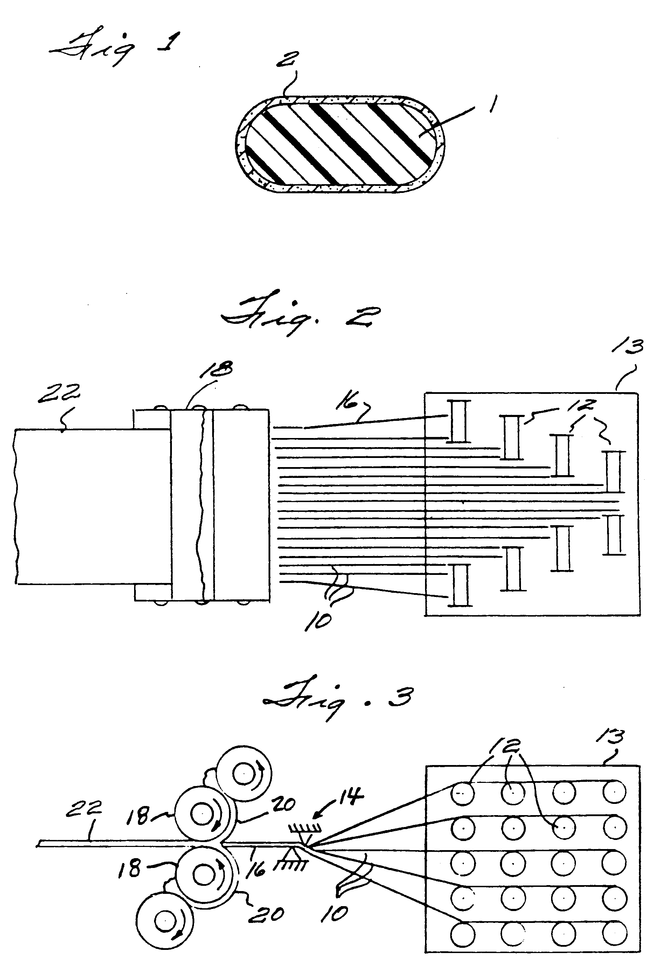

Referring to Figure 1, a cross-sectional view of a preferred monofilament of this invention is illustrated wherein 1 represents the monofilament with an obround shape (i.e., generally flat, ribbon-like with rounded corners) having a coating of adhesive 2 on its surface.

Monofilaments suitable for this invention are prepared from organic polymers or copolymers such as polyamides, polyesters, polyolefins, polyvinylalcohol, etc., which are suitable for fibers for rubber reinforcement. Typically, high viscosity polymers (e.g., intrinsic viscosity greater thin 0.6 for polyesters and relative viscosity on a formic acid basis of greater than 50 for polyamides) are used for producing high strength (greater than 6,2 dN/tex (7 gpd)) and high durability industrial filaments. Suitable polyamides include poly-(hexamethylene adipamide), poly-(caproamide), poly-(tetramethylene adipamide), etc., and their copolymers. Suitable polyesters include poly-(ethylene terephthalate), poly-(propylene terephthalate), poly-(butylene terephthalate), poly-(ethylene 2,6 napthoate), poly-(1,4 cyclohexanedimethanol terephthalate), and their copolymers. Suitable polyolefins include polyethylene, polypropylene, polybutylene, etc., and their copolymers.

A process like that of U.S. 4,009,511 is preferred for the polyamide monofilaments of this invention because the steaming step causes a highly porous layer to be formed on the filament surface of about 3-15 microns thickness. This porous surface can be easily seen in the cross-section of the filament under a microscope and can be readily delineated by dyeing under mild dyeing conditions, wherein the surface layer becomes deeply dyed relative to the core of the filament. The surface layer is further characterized by its refractive index, n//, being less than 1.57. The porous surface is believed to be responsible for the superior bonding of polyamide monofilaments containing such a surface to rubber when such monofilaments are coated with an adhesive like RFL, even at relatively low levels of adhesive, as hereinafter described.

The deniers of the monofilaments of this invention are in the range of 500-10,000 (550-11,000 dtex). Monofilaments suitable for tires have deniers in the range of 750-10,000 (820-11,000 dtex).

The cross-section of the monofilament can be of any shape. However, for tire and most other applications, a non-round cross-section like obround is preferred. Obround is a generally flat, ribbon-like cross-section where the corners are rounded. The ribbon-like cross-section is generally easier to manipulate during formation of end-use articles, such as tires.

The monofilaments of this invention have a shrinkage of less than 4.5% otherwise end-use product yield, size and uniformity are adversely affected. This is especially true for tires, belts and such like end-uses. In addition, the monofilament modulus is greater than 39 dN/tex (45 gpd), preferably greater than 44.2 dN/tex (50 gpd) and its tenacity is greater than 6.2 dN/tex (7.0 gpd), preferably greater than 7.0 dN/tex (8.0 gpd). In both the modulus and tenacity properties, the monofilaments of this invention are superior to their multifilament counterparts prepared by the twisting, cabling, weaving, dipping, stretching and setting sequence. For example, poly-(hexamethylene adipamide) monofilaments of this invention generally have tenacities in the range of 7.5-7.9 dN/tex (8.5-9.0 gpd) and moduli of 48.6-53.0 dN/tex (55-60 gpd); analogous poly-(hexamethylene adipamide) multifilament cords have tenacities of about 7.0 to about 7.5 dN/tex (about 8.0 to about 8.5 gpd) and moduli of 30.9-35.3 dN/tex (35-40 gpd). The higher strength and modulus result in improved end-use product stability and strength. In tires, for example, these property improvements are reflected in higher plunger energy, cooler running and improved uniformity when the monofilaments are used to reinforce the carcass ply or plies.

The monofilaments of this invention have an adhesive coating on the filaments which facilitate the bonding of the filament to rubber. The most commonly used coating contains a combination of resorcinol, formaldehyde and latex, and is commonly referred to as RFL. Other adhesive coatings could be used as long as they promote the bonding between the monofilament and rubber. Surprisingly, low levels of RFL on the monofilaments, 0.5-5%, yield good adhesion to rubber. By contrast, analogous poly-(hexamethylene adipamide) multifilament cords require much higher levels of RFL adhesive coating, 4-7%, in order to achieve acceptable adhesion.

The adhesive coating can be applied to the monofilament by any of the typical processes for coating a filament, such as dipping in a bath containing a dispersion or solution of adhesive materials, spraying a dispersion or solution of adhesive materials on the filament, applying molten or neat liquid adhesive on the filament, etc. In a preferred process, the untwisted and unplied monofilament is dipped in an aqueous dispersion of adhesive, such as RFL, so that 0.5-5.0 weight percent adhesive is picked up (dry weight of adhesive on dry weight of filament basis). The still-wet monofilament is oven treated at 149-260°C (300-500°F) to dry and set the monofilament in one or more stages. The monofilament is commonly stretched during the heating stages, but may be relaxed depending on the final cord properties desired. The dipping, stretching, setting conditions for the monofilament are adjusted to suit the polymeric nature of the monofilament and the end-use for which it is to be used. For certain monofilaments, such as polyester, it is helpful to precoat the filament with an adhesion activator, prior to coating with the adhesive. A typical precoat for polyester contains a mixture of LVBI isocyanate, gum tragacanth and epoxy resin (N.E.R.-10A) as an aqueous dispersion. Other epoxy, aziridine, isocyanate or urethane precoats can be used, or combinations of such precoats.

The monofilament of this invention, prepared with the specific properties, and adhesive coating described above, is ready for direct embedment in rubber. The product does not require any of the following steps: singles or ply twisting, cabling, weaving, adhesive dipping, stretching or setting. It was surprising to find that the monofilament required no added twist, since it is well known that analogous multifilament yarns require singles and ply twisting, to achieve the desired level of fatigue resistance in, for example, tire applications.

In accordance with the invention, monofilaments which are ready for direct embedment in rubber on a package or beam are formed into a warp with generally parallel filaments and generally even spacing. The warp is embedded in rubber under tension, e.g., creel-calendered with one or more sheets of green rubber stock to produce a rubber fabric reinforced with monofilament which is suitable for tire building or other applications. Referring now to Figures 2 and 3, a typical process is illustrated. Monofilaments 10 of this invention, ready for rubber embedment, are unwound from packages 12, arranged in a creel indicated by the numeral 13. The monofilament cords are fed through a reed 14 which forms the monofilaments into a warp 16 of parallel and evenly spaced cords. The warp 16 is fed while under tension between calendar rolls 18, to which two layers of green rubber stock 20 are also being simultaneously fed, such that a layer of rubber is calendered or pressed onto the warp sheet of monofilaments from both the top and bottom. The result is a monofilament-reinforced rubber fabric 22 suitable for making reinforced rubber articles such as tires.

Rubber articles in accordance with the invention have at least one layer of monofilaments which are generally parallel and generally evenly spaced apart and are free of pick yarns and filaments bridging between filaments as is found in rubber articles produced from woven cord reinforcements.

The monofilament and reinforced rubber fabric produced in accordance with this invention can be used in a wide range of articles such as tires, hoses, power transmission belts, conveyer belts, etc. In tires, it is useful in chafers, breakers and as carcass reinforcement. In summary, such monofilament and fabric avoid process steps in the manufacture of reinforced rubber goods and offer significant economies to the trade.

**TEST METHODS**

Denier: The monofilament is conditioned relaxed (in skein form) for a minimum period of 48 hours at 55 ± 2%RH, and 23.9 ± 1.1°C (75 ± 2°F). A 9 meter sample of the monofilament is cut from the relaxed skein and weighed. The weight of a 9000 meter sample in grams is calculated from this weight; this is the denier. A denier correction for any adhesive present is made based on the measured amount of adhesive on the filament as determined below.

Tensile Properties: Before tensile testing, the monofilament is conditioned relaxed (in skein form) for a minimum period of 48 hours at 55 ± 2%RH, and 23.9 ± 1.1°C (75 ± 2°F). A recording instron unit is used to characterize the stress/strain behavior of the relaxed-conditioned monofilament. Samples are gripped in air-activated Type 4-D Instron clamps maintained at at least 275 kPa (40 psi pressure). Samples are elongated to break while continuously recording monofilament stress as a function of strain. Initial gauge length is 25.4 cm (10 inches), and cross head speed is maintained at a constant 30.5 cm/minute (12 inches/minute).

Break Strength is the maximum load achieved prior to rupture of the sample.

Tenacity is calculated from the break strength divided by the weight in per. length in dtex (denier) (after correcting for adhesive on the filament).

Elongation is the strain in the sample when it ruptures.

Modulus is the slope of the tangent line to the initial straight line portion of the stress strain curve, multiplied by 100 and divided by the corrected denier. The modulus is generally recorded at less than 2% strain.

Shrinkage: After relax conditioning the monofilament for 48 hours at 55 ± 2%RH and 23.9 ± 1.1°C (75 ± 2°F), a loop is formed from a 1 meter length of the monofilament and loaded to .01 grams per denier 0.011 dN/tex). The initial length of the loop is measured, then the loaded sample is placed in a hot air chamber with temperature maintained at 160 ± 2°C for 15 minutes. A final length of the loop is then measured while still at 160 ± 2°C allowing a calculation of length change and % shrinkage.

Weight % adhesive on monofilament: Adhesive on monofilament is determined by weighing an adhesive treated sample that has been cut into short (2.54 cm = 1 inch or less) sections. The polymer portion of the cut sample is then dissolved in an appropriate solvent (hot formic acid for polyamide, trichloroacetic acid and methylene chloride mixture for polyester). After rinsing and drying, the weight of the undissolved adhesive is measured and the % adhesive on monofilament determined by dividing the weight of undissolved adhesive by the weight of the monofilament without adhesive and multiplying by 100.

Hot, 2-Ply Strip Adhesion Test: The test utilized was the same as ASTM Test D-4393-85; Strip Peel Adhesion of Reinforcing Cords or Fabrics to Rubber Compounds (pages 1133-1142; 1985 Annual Book of ASTM Standards, Section 7, Volume 7.01) with a few modifications. The particular variation used was to test individual monofilament tire cords that had been RFL dipped singly. The rubber stock employed was a combination of natural rubber (80 parts by weight), styrene-butadiene rubber (20 parts), N351 Black (35 parts), plus minor amounts of other conventional ingredients. The dipped tire cords were warped so that adjacent cords directly abutted each other. For example, 2200 dtex (2,000 denier) dipped cord requires about 28 ends per 2,54cm (inch.) After embedment of the cords in the rubber stock, the sample was cured at 160°C ± 2°C for 20 minutes at 1340 kPa pressure. Since hot adhesion was desired, the samples were heated in the Instron oven at 120°C for 25 ± 5 minutes prior to testing. The separation force was based on Option 1 (the mid-line between the high and low peaks of separation force). Eight samples per warp were tested and the results were reported as average force in pounds per inch.

## EXAMPLES

### Examples 1 - 3

These Examples describe the preparation of embodiments of this invention based on poly-(hexamethylene adipamide) polymer.

Three poly-(hexamethylene adipamide) monofilaments were prepared by the process described in U.S. 4,009,511 having nominal deniers of 2,000, 3,000 and 4,000 den (2,200, 3,300, and 4,400 dtex). Each was prepared from 70 RV (formic acid basis) polymer and had an obround cross-section.

Without twisting or plying, each monofilament was dipped at ambient temperatures (18-27°C = 65-80°F) in an aqueous RFL dispersion (D-5A) containing 20% solids. Each was then stretched 1.5% and heated at 215.6°C (420°F) for 60 sec. The properties of the three monofilaments so prepared (Examples 1, 2 & 3), as well as the amount of adhesive as weight % of dry adhesive on the weight of the dry monofilament are listed in Table 1.

Examples 1, 2 & 3 were embedded in rubber stock and tested for hot (120°C) two-ply adhesion. Results are listed in Table 1. It can be seen that each of the monofilament Examples of this invention gave superior adhesion to rubber versus that of an analogous poly-(hexamethylene adipamide) multifilament cord, Control 1, even though the adhesive on the monofilament was notably lower (36-48%) than the Control.

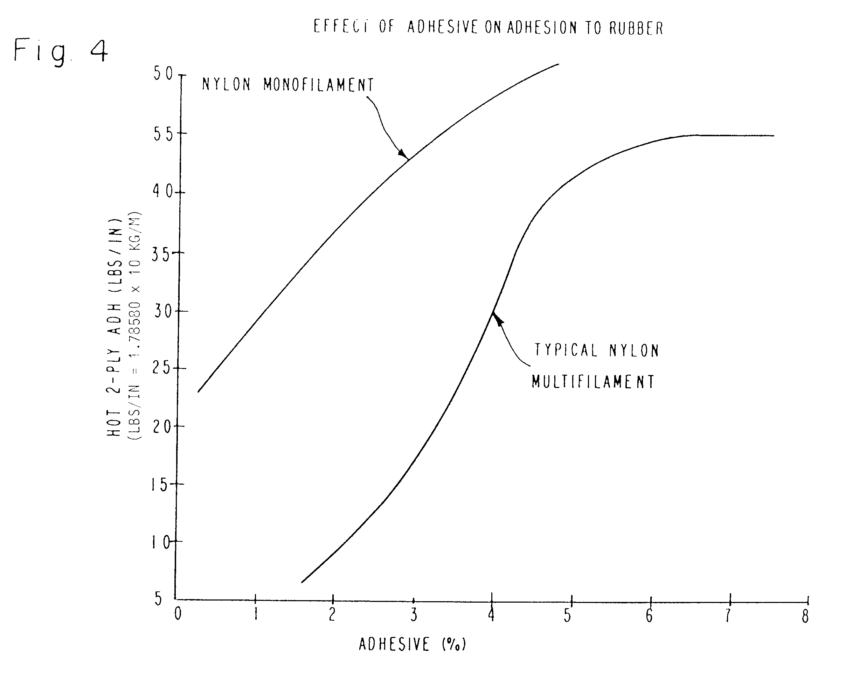

In a second set of experiments, the three monofilaments described in the second paragraph of this Example were dipped in RFL adhesive (20% solids, D5A), stretched & heated under a wide variety of conditions. Each of these cords were embedded in rubber and assessed for hot, two-ply adhesion, with the results plotted in Figure 4 as a function weight % of dry adhesive on the dry monofilament. For comparison, T-728 multifilament nylon yarn, converted to greige cord as described in Control 1, was similarly dipped in RFL, stretched and heated under a variety of conditions. The T-728 cords were then embedded in rubber and evaluated for hot two-ply adhesion. The results with the T-728 cord are also plotted in Figure 4.

It can be readily seen from Figure 4 that the hot, two-ply adhesion is superior for nylon monofilament vs. multifilament cord at all levels of RFL adhesive evaluated; i.e., over the range of about 0.5% to about 5% adhesive on filament.

### Example 4

The Example describes preparation of an embodiment of this invention based on polyester polymer.

A 2749 denier (3024 dtex) monofilament was prepared from poly-(ethylene terephthalate) by the method described in U.S. 3,963,678. It was then precoated from a slot applicator with polyaryl polyisocyanate (PAPI), which is an adhesion activator. Then the monofilament was dipped in RFL adhesive (D5A; 20% solids) and then heated and stretched (or relaxed) in three stages to give a monofilament cord ready for rubber embedment (Example 4). The conditions in the three stages were: temperature, 232/232/218°C (450/450/425°F); stretch (or relax), 15/0/(-4%); time, 60/60/60 sec.

The cord so prepared was embedded in rubber and tested for hot two-ply adhesion. The dipped cord and adhesion results are given in Table 1.

When compared with an analogous multifilament poly-(ethylene terephthalate) cord like Control 2, Example 4 shows a significant advantage in modulus and an acceptable level of adhesion to rubber at only 1.6% RFL adhesive, which was 33% less adhesive than on Control 2.

### Control 1

Cord suitable for rubber embedment was prepared from 138.6 dtex (1260 denier) multifilament poly-(hexamethylene) adipamide) yarn containing 210 filaments; the yarn was manufactured and sold by the E. I. du Pont de Nemours Co. as type 728. The yarn was singles twisted to 10 turns per 2,54cm (inch) (tpi). Two ends of the twisted singles yarn was cabled (twisted) to 10 tpi in a direction opposite to the singles twist to

EP 0 350 944 B1

yield greige cord. The cord was dipped in D-5A RFL (20% solids) adhesive and then heated and stretched (or relaxed) in three stages under the following conditions: Temperature, 135/216/210°C (275/420/410°F); Stretch, 1/12/(-2%); Time, 84/48/77 sec.

The cord prepared above was embedded in rubber stock and tested for hot (120°C) two-ply strip adhesion. Data on the dipped cord and adhesion properties are given in Table 1.

**Control 2**

Polyester multifilament cord suitable for rubber embedment was prepared starting from 1100 dtex (1000 denier) (192 filaments) poly-(ethylene terephthalate) yarn (Type 68 from E. I. du Pont Co.). The singles yarn was twisted (9 tpi) and three ends of singles yarn was plied and twisted (9 tpi) in a direction opposite to that of the singles yarn to form greige cord. This cord was precoated with an isocyanate adhesion activator (D417B) and then dipped in an RFL adhesive (D5A, 20% solids), stretched and heated in two stages under the following conditions: temperature, 243/216°C (470/420°F); stretch, 3/0%; time, 50/80 sec. Properties of the cord so-prepared are listed in Table 1.

**Example 5**

14 packages of ready-for-rubber polyamide monofilament as produced in Example 2 were placed in a creel. Each end was fed through a series of guides and then directed into a 1 inch wide 14-hole baffle designed to maintain uniform cord spacing. A 80/20 natural rubber/styrene-butadiene rubber suitable for use in the carcass of automobile tires was extruded (at about 155°C) onto the monofilament cords and pulled through a die to form a 1 inch wide strip of rubber coated fabric. The rubberized strip was wound onto a drum, butting the edge of the strip to itself to form a wider continuous fabric.

Two 19,3 x 21,9cm (8 x 9 inch) plies of this rubberized fabric were plied together with the monofilament cords aligned essentially parallel to one another in the two plies. The plied fabric was then cured at 160°C for 20 minutes at 1340 KPa pressure. Hot 2-ply strip adhesion was 19 kg (42 lbs).

6

Table 1
Dipped Cord Properties

| Polymer | Ctrl 1 6,6 Nylon Multi-fil. | Ex. 1 6,6 Nylon Mono-fil. | Ex. 2 6,6 Nylon Mono-fil. | Ex. 3 6,6 Nylon Mono-fil. | Ctrl 2 Polyester Multi-fil. | Ex. 4 Polyester Mono-fil. |
|---|---|---|---|---|---|---|
| Adhesive (wt.%) | 6.4 | 4.0 | 4.1 | 3.3 | 2.4 | 1.6 |
| Denier / (dtex) | 2670 (2937) | 2140 (2354) | 3106 (3416) | 4173 (4590) | 3150 (3465) | 2749 (2824) |
| Brk Str, kg (lbs) | 20.9 (46.2) | 18.6 (41.0) | 27.1 (59.8) | 35.5 (78.3) | 22.7 (50.2) | 14.4 (43.8) |
| Tenacity, gpd (dN/tex) | 7.9 (7.0) | 8.7 (7.7) | 8.7 (7.7) | 8.5 (7.5) | 7.2 (6.3) | 7.2 (6.3) |
| Elongation, % | 17 | 17 | 19 | 19 | 14 | 19 |
| Modulus, gpd (dN/tex) | 35 (30.9) | 58 (50.6) | 56 (49.5) | 57 (50.3) | 63 (54.5) | 73 (64.5) |
| Shrinkage, % | 8.0 | 3.4 | 4.4 | 3.2 | 6.2 | 2.1 |
| Singles Twist (tpi) Turns/dm | 10 / 39.4 | 0 | 0 | 0 | 9 / 35.5 | 0 |
| Cable Twist (tpi) Turns/dm | 10 / 39.4 | 0 | 0 | 0 | 9 / 35.5 | 0 |
| Two-Ply Adhesion (lbs/in)(120°C) kg/m | 51 / 92 | 56 / 101 | 59 / 106 | 55 / 99 | 38 / 68 | 36 / 65 |

## Claims

1. A method for producing a reinforced rubber fabric comprising:
   unwinding monofilaments of an organic polymer from a plurality of monofilament packages and forming a warp of said monofilaments wherein said monofilaments are generally parallel and generally evenly spaced-apart, said monofilaments being substantially free of twist and having a surface defining the cross-sectional shape of the monofilaments, a weight per length in the range of from 550-11,000 dtexpf (500-10,000 dpf), a shrinkage of less than 4.5%, a modulus greater than 40 dN/tex (45 gpd), a tenacity of greater than 6 dN/tex (7.0 gpd), and an adhesive coating of from about 0.5 to about 5 percent by weight on the surface of said monofilaments;

embedding said warp of monofilaments in rubber to produce a reinforced rubber fabric free of pick yarns while maintaining tension on said monofilaments to maintain said monofilaments in a generally parallel and evenly spaced-apart relationship.

2. The method of claim 1 wherein said embedding of said warp of monofilaments in rubber is performed by feeding said warp between a pair of calender rolls, each roll being supplied with a layer of rubber.

3. The method of claim 1 wherein said cross-sectional shape of said filaments is obround.

**Patentansprüche**

1. Verfahren zur Herstellung eines verstärkten Kautschukgewebes, umfassend:

Abwickeln von Monofilamenten aus einem organischen Polymer von einer Vielzahl von Monofilamentspulen und Herstellung eines Kettgarns aus den Monofilamenten, worin die Monofilamente im allgemeinen parallel und im allgemeinen gleichmäßig voneinander beabstandet verlaufen, wobei die Monofilamente im wesentlichen drehungsfrei sind und eine Oberfläche aufweisen, die die Querschnittsform der Monofilamente umgrenzt, und ein Längengewicht im Bereich von 550 - 11 000 dtexpf (500 - 10 000 dpf), eine Schrumpfung von weniger als 4,5 %, einen Modul von mehr als 40 dN/tex (45 gpd), eine Festigkeit von mehr als 6 dN/tex (7,0 gpd) und eine Klebstoffschicht von etwa 0,5 bis etwa 5 Gew.-% auf der Oberfläche der Monofilamente besitzen;

Einbetten des Kettgarns aus Monofilamenten in Kautschuk, um ein verstärktes, pickgarnfreies Kautschukgewebe herzustellen und dabei die Spannung an den Monofilamenten so aufrechtzuerhalten, daß die Monofilamente in einer im allgemeinen parallelen und gleichmäßig voneinander beabstandeten Anordnung verbleiben.

2. Verfahren nach Anspruch 1, worin das Einbetten des Kettgarns aus Monofilamenten in Kautschuk durch Hindurchführen des Kettgarns zwischen einem Paar Kalanderwalzen erfolgt, wobei jeder Walze eine Schicht Kautschuk zugeführt wird.

3. Verfahren nach Anspruch 1, worin die Querschnittsform der Filamente länglich ist.

**Revendications**

1. Un procédé de fabrication d'un tissu en caoutchouc renforcé comprenant les étapes suivantes:

- débobinage des monofilaments d'un polymère organique à partir d'une pluralité de bobines de monofilament et formation d'une chaîne desdits monofilaments dans laquelle lesdits monofilaments sont généralement parallèles et généralement équidistants les uns des autres, lesdits monofilaments étant sensiblement exempts de torsion et présentant une surface définissant la forme de la section transversale des monofilaments, un poids par longueur compris entre 550 et 11 000 dtexpf (500 à 10 000 dpf), un retrait inférieur à 4,5%, un module supérieur à 40 dN/tex (45 gpd), une ténacité supérieure à 6,2 dN/tex (7,0 gpd) et un revêtement d'adhésif d'un poids d'environ 0,5 à environ 5% en poids sur la surface desdits monofilaments;

- incorporation de ladite chaîne de monofilament dans du caoutchouc pour fabriquer un tissu de caoutchouc renforcé exempt de filé en trame tout en exerçant une tension sur lesdit monofilaments pour maintenir lesdits monofilaments en relation généralement parallèle et équidistance les uns des autres.

2. Le procédé selon la revendication 1, dans lequel ladite incorporation de ladite chaîne de monofilament dans le caoutchouc est mise en oeuvre par introduction de ladite chaîne entre une paire de cylindres de calandrage, chaque cylindre étant alimenté par une couche de caoutchouc.

3. Le procédé selon la revendication 1, dans lequel ladite forme en section transversale desdits filaments est oblongue.

Fig. 1

Fig. 2

Fig. 3

10

EFFECT OF ADHESIVE ON ADHESION TO RUBBER

Fig. 4